# EUROPÄISCHE PATENTSCHRIFT

(11) **EP 1 694 756 B1**
(45) Veröffentlichungstag und Bekanntmachung des Hinweises auf die Patenterteilung: **03.12.2008**
(21) Anmeldenummer: 04791043.5
(22) Anmeldetag: 29.10.2004
(51) Int. Cl.: C08K 3/00, C08K 3/22, C08L 33/10

(54) **REAKTIONSHARZE AUF METHACRYLATBASIS OHNE SCHRUMPF**
METHACRYLATE-BASED REACTIVE RESINS WITHOUT SHRINKAGE
RESINES DE REACTION A BASE DE METHACRYLATE SANS RETRAIT

(30) Priorität: 16.12.2003 DE 10359359; 05.03.2004 DE 102004011388
(43) Veröffentlichungstag der Anmeldung: 30.08.2006
(73) Patentinhaber: Evonik Röhm GmbH, 64293 Darmstadt (DE)
(72) Erfinder: ROOS, Sebastian, 65779 Kelkheim (DE); ROHRER, Monika, 63755 Alzenau-Hörstein (DE); TRÖMER, Christine, 63546 Hammersbach (DE); OLBRICH, Michael, 63791 Karlstein (DE); STREIT, Jürgen, 63755 Alzenau-Hörstein (DE); HEEB, Heike, 63526 Erlensee (DE)
(86) Internationale Anmeldenummer: PCT/EP2004/012283
(87) Internationale Veröffentlichungsnummer: WO 2005/061601

(56) Entgegenhaltungen:
- EP-A- 0 640 651
- EP-A- 0 736 645
- DE-A1- 3 248 571
- US-A- 4 771 095

## Beschreibung

Die Erfindung betrifft Reaktionsharze auf Methacrylatbasis ohne Schrumpf und mit guter Nasshaftung sowie deren Verwendung.

Kanalsysteme (z. B. Abwasser, Frischwasser) mit unterschiedlichen Nennweiten und verschiedenen Schadensbildern erfordern verschiedene Arten der Sanierung. Nach der Definition der DIN EN 752-5 umfasst der Begriff Sanierung alle Maßnahmen zur Wiederherstellung oder Verbesserung von vorhandenen Entwässeungsanlagen (DIN EN 752-5 Ausgabe: 1997-11, Entwässerungssysteme außerhalb von Gebäuden - Teil 5: Sanierung).Sie kann prinzipiell in drei Gruppen eingeteilt werden. Renovierung, Reparatur, Erneuerung. Diese Gruppen lassen sich wiederum in mehrere Verfahren (z.B. Beschichtungsverfahren, Auskleidungsverfahren) unterteilen.

Eine Möglichkeit zur Sanierung lokaler Schäden an nicht begehbaren Kanalrohren ist die Reparatur mit einem Abdichtungsverfahren, das so genannte Kurzschläuche (auch Partielle Inliner, Partliner, Kurzliner, Shortliner genannt) einsetzt. Kurzschläuche bestehen aus reaktionsharzgetränkten Trägermaterialien, die durch Aushärten an der Schadensstelle eine mit der Kanalwandung fest verklebten Innenschale entstehen lassen.

Als Reaktionsharz werden vornehmlich kalthärtende Epoxidharze, Methacrylate, Organomineralharze oder Polyurethane eingesetzt. Bisweilen werden auch warm- und lichthärtende Systeme eingesetzt. Insoweit bestehen Ähnlichkeiten mit dem Renovierungsverfahren "Schlauchlining", andererseits aber ein grundlegender Unterschied; während beim Kurzschlauch Form- und Kraftschluss mit dem Altrohr zwingende Bedingungen für den Erfolg der Reparatur sind, ist dies beim Schlauchlining nur bedingt (Formschluss), bzw. überhaupt nicht (Kraftschluss) gewollt bzw. erforderlich. Ein Kurzschlauch ist also kein kurzes Stück Schlauchliner.

Kurzschläuche sollen vorrangig die Abdichtung und die Stabilisierung der Standsicherheit von Kanalabschnitten begrenzter Länge bewirken.

Die häufigsten Schadensbilder, die zur Sanierung anstehen, sind: Längsrisse, Radialrisse, Scherbenbildung, Löcher, undichte Rohrverbindungen. Weiterhin gibt es: Muffenversatz (bis maximal Rohrwandstärke und axiale Lageabweichungen), Wurzeleinwuchs, Verschließen nicht mehr benötigter Anschlüsse.
Besonders schwierig ist die Sanierung von nicht begehbaren Kanälen. Häufig sind es Kreisprofile DN150 bis max. DN 800. Im Hausanschlussbereich werden teilweise auch Rohrdurchmesser kleiner DN 150 mm repariert.

Nach den einschlägigen Merkblättern muss nach einer Inspektion der zu reparierende Rohrabschnitt mit Hochdruckspülgeräten gereinigt werden und anschließend eine Untergrundvorbereitung, z. B. durch Schleifen oder Fräsen, erfolgen. Während der Reparatur soll der Kanal wasser-/abwasserfrei sein. Bei der Reparatur wird ein mit Reaktionsharz getränktes Glasfasergewebe oder Polyesternadelvlies mit einem Packer, das ist ein aufblasbarer Gummizylinder, an der Schadensstelle positioniert (von Hand oder mit mechanischen Hilfsmitteln). Durch Aufblasen des Packers mit Druckluft wird das Laminat an die Kanalwand gepresst und erhärtet dort. Die Aushärtung erfolgt bei Umgebungstemperatur, durch Beheizung oder (seltener) durch UV-Bestrahlung. Bei Verwendung von

Durchflusspackern oder Hohlpackern darf erst während der Aushärtephase (also nach dem Setzen des Packers) der Kanal freigegeben werden.

Die zu beschichtenden Kanalrohrmaterialien sind vielfältig. Kanalrohrmaterialien sind z. B. Beton- und Steinzeugrohre, Asbestzement, Stahlbeton, Faserzement, Gusseisen, Polyvinylchlorid (PVC), high density Polyethylen (HD-PE) und mit Glasfaser verstärkte Kunststoffe (GFK).

Es gibt eine Vielzahl von Kurzschlauch-Systemen. Die Mehrzahl beruht auf GFK und Organomineralharz bzw. GFK und Epoxidharzen. Das "3P-Inliner^{®}"-System (JT Elektronik GmbH, Lindau) besteht aus Natriumwasserglas und einem Isocyanat. Das Isocyanat reagiert mit dem Wasser der Natrium-Silikat-Lösung zu Polyharnstoff und Kohlendioxid und das Kohlendioxid setzt sich mit dem Wasserglas zu Natriumcarbonat und polymerer Kieselsäure um.

Ein weiteres System "EasyPUR" (CarboTech Fosroc, Essen) enthält neben Natriumwasserglas und Diphenylmethanisocyanat einen Beschleuniger und einen Vernetzer.

Das System "Alocan^{®}" (Alocit Chemie GmbH, Konstanz) basiert auf Hydroxyethylmethacrylat und Methylmethacrylat.

Die bekannten Systeme haben den Nachteil, dass das Harz nicht schnell genug aushärtet. Nach dem Entfernen des Packers hat das Reaktionsharz im Randbereich noch nicht die mechanische Endhärte erreicht, was zu Undichtigkeiten führt.

Ein weiterer Nachteil ist die bei einigen Produkten auftretende schlechte Haftung auf feuchten Untergründen, die Nasshaftung. Die zu reparierenden/sanierenden Kanalrohre werden vor der Reparatur zumeist mit Wasser gespült, um Verunreinigungen zu entfernen. Die Reparatur erfolgt dann in den feuchten Kanalrohren.

Ein weiterer Nachteil ist die relativ starke Schrumpfung. Dies tritt vor allem bei Methacrylat-Reaktionsharzen auf. Hierbei handelt es sich um die Schwindung in alle Raumrichtungen, ein bekanntes Phänomen bei Kunststoffen, das auf die verschiedenen Dichten von Monomeren und Polymeren zurückzuführen ist. Bei der Abdichtung von Kanalrohren kann dies zur Ablösung des Reparaturmaterials von der Kanalwand, bei unzureichendem Haftverbund während des Aushärtevorgangs, führen.

Aufgabe war es daher, schnell kalthärtende Reaktionsharze ohne Schrumpf und mit guter Haftung auf nassen/feuchten glasierten Steinzeug-Untergründen zur Verfügung zu stellen.

Die Aufgabe wurde gelöst durch Reaktionsharze auf Methacrylatbasis, die anorganische Materialien enthalten, die zu einer Volumenexpansion mit Wasser führen. Es werden Reaktionsharze auf Methacrylatbasis verwendet, die Calciumoxid (CaO), Magnesiumoxid (MgO), Calciumsulfat (CaSO₄) und/oder Ettringit und gegebenenfalls auch Feinfüller, enthalten.

Methacrylate werden eingesetzt, weil sie eine hervorragende Witterungsbeständigkeit aufweisen.

Überraschend wurde gefunden, dass bei der Zugabe von Calciumoxid der Schrumpf völlig eliminiert wird. Untersuchungen haben gezeigt, dass die erfindungsgemäßen Reaktionsharze auf Methacrylatbasis bei der Zugabe von geringen Mengen Calciumoxid einen geringen Schrumpf vor und keinen Schrumpf nach dem Tempern (Temperung simuliert Langzeitversuch) aufweisen. Calciumoxid kann in Mengen von 1-20%, bevorzugt 1-10%, zugesetzt werden.

Durch die Zugabe von Magnesiumoxid oder Calciumsulfat wird ebenfalls eine Eliminierung des Schrumpfes erreicht. Diese Materialien sind in der Lage, mit dem Wasser der Luftfeuchtigkeit zu ihren Hydroxiden zu reagieren. Die Dichte der Oxide ist größer als die ihrer Hydroxide (z. B. CaO: 3,4 g/cm³, Ca(OH)₂: 2,23 g/cm³ oder MgO: 3,58 g/cm³, Mg(OH)₂: 2,40 g/cm³). Wirken auf erhärteten Beton sulfathaltige Lösungen ein, so kommt es in Gegenwart von Calciumaluminat bzw. Calciumaluminathydraten zur Bildung des sehr kristallwasserreichen Trisulfates (Ettringit), das so genannte Sulfattreiben. Das Molvolumen vergrößert sich teilweise auf das Achtfache. Damit wird das Materialgemisch expandiert, was dem üblichen Schrumpf entgegenwirkt.

Es ist bekannt, dass durch die Zugabe von Feinfüller (z.B. Zement) der Schrumpf ebenfalls gesenkt werden kann (Bauchemie, 1/2000, S. 10-11). Feinfüller wird in Mengen von 1-200%, vorzugsweise 20-150%, zugegeben.

Es wurde gefunden, dass es zur Expansion des Materials kommt, wenn es in direktem Kontakt mit Luftfeuchtigkeit oder Wasser steht. Die Expansion fördert eine optimale Abdeckung der schadhaften Stelle in einem Kanalrohr.

Als Ausgangsgemisch wird ein marktübliches Reaktionsharz auf Methacrylatbasis verwendet (Röhm GmbH & Co KG, Darmstadt). Es besteht vorzugsweise aus (Meth)acrylat (50-90%), einem Polymeren bestehend aus (Meth)acrylaten und (Meth)acrylsäuren (10-40%), einem Vernetzer auf Methacrylatbasis, wie z.B. bi- oder trifunktionelle (Meth)acrylate (1-10%), AminBeschleuniger (0,1-3%), Inhibitoren, wie z.B. 4-Methyl-2,6-di-tert-butylphenol (0,01-0,05%), Initiatoren, wie z.B.: Benzoylperoxid (0,5-5%) sowie andere Monomere wie z.B. Styrol, gamma-Methacryloyloxypropyltrimethoxysilan oder Urethanmethacrylate (1-30%). Die Schreibweise (Meth)acrylat bedeutet hier sowohl Methacrylat, wie z.B. Methylmethacrylat, Ethylmethacrylat usw., als auch Acrylat. Die erfindungsgemäßen Zugaben von CaO, MgO, CaSO₄, Ettringit und gegebenenfalls Feinfüller (z.B. Zement), die zu einer Volumenexpansion mit Wasser führen, wird auf die bestehende Rezeptur addiert (100% Reaktionsharz + Zusätze).

Eine besonders bevorzugte Ausführungsform stellt ein Verbund aus Glasfasergewebe, vorzugsweise E-CR-Glas (gegen Schwefelsäure beständig), oder anderen geeigneten Geweben, wie z.B. Polyesternadelvlies, mit dem Reaktionsharz auf Methacrylatbasis dar. Hierzu wird vorzugsweise ein handelsübliches Glasfasergewebe mit dem erfindungsgemäßen Reaktionsharz getränkt und anschließend ausgehärtet.

Ein wichtiges Qualitätskriterium für Reaktionsharze und Verbunde, die zur Kanalsanierung verwendet werden, ist die Nasshaftung. Üblicherweise wird bei der Sanierung das Reaktionsharz oder der Verbund auf nassen Untergründen appliziert. Es wurde gefunden, dass die erfindungsgemäßen Reaktionsharze bzw. der Verbund sehr gute Nasshaftung aufweist. Versuche haben gezeigt, dass die erfindungsgemäßen Reaktionsharze sowohl auf gestrahlten und ungestrahlten trockenen und nassen Betonplatten, als auch auf gestrahlten und ungestrahlten trockenen und nassen Kanalrohren hervorragende Haftung aufweisen.

Die Aushärtung geschieht im allgemeinen bei Temperaturen im Bereich von -10°C bis +45°C. Solche Harze nennt man kalthärtend.

Eine bevorzugte Ausführungsform zeichnet sich dadurch aus, dass das Aushärten bei Umgebungstemperatur (0°C bis +20°C) erfolgt.

Neben den angeführten Kriterien sind jedoch auch weitere mechanische Eigenschaften, wie z.B. die Shore Härte, die Glastemperatur usw., für die

Eignungsprüfung von Reaktionsharzen von Bedeutung.

Das erfindungsgemäße Reaktionsharz auf Methacrylatbasis kann als Reparaturmaterial für Kanalsanierungen verwendet werden. Vorzugsweise wird es als Verbund mit Glasfasergewebe zur Kanalsanierung verwendet.

Außerdem kann das Reaktionsharz auf Methacrylatbasis als Dübelharz verwendet werden. Dazu werden dem erfindungsgemäßen Reaktionsharz Bindemittel, das radikalisch nicht polymerisierbare Polymere, Reaktivverdünner, weiter Polymere und nicht reaktive Lösungsmittel enthält, und ggf. noch weitere Füllstoffe zugesetzt.

Die im Folgenden gegebenen Beispiele werden zur besseren Veranschaulichung der vorliegenden Erfindung gegeben.

### Beispiele

### Beispiel 1

Es wird ein Gemisch aus 71,27% Methylmethacrylat, 25% eines Polymeren, bestehend aus Methylmethacrylat-co-Methacrylsäure und 2-Ethylhexylacrylat, 3% Triethylenglycoldimethacrylat, 0,3% N,N-bis(2-hydroxypropyl)-p-toluidin, 0,4% N,N-dimethyl-p-toluidin und 0,03% 4-Methyl-2,6-di-tert-butylphenol hergestellt. Diesem Reaktionsharz auf Methacrylatbasis werden mittels eines Dissolvers zusätzlich 10% CaO und 40% Zement (bezogen auf 100% Reaktionsharz) zugegeben. Zum Aushärten wird anschließend 1 % Benzoylperoxid zugefügt.

Probe E1

### Beispiel 2

Es wird ein Gemisch aus 71,27% Methylmethacrylat, 25% eines Polymeren, bestehend aus Methylmethacrylat-co-Methacrylsäure und 2-Ethylhexylacrylat, 3% Triethylenglycoldimethacrylat, 0,3% N,N-bis(2-hydroxypropyl)-p-toluidin, 0,4% N,N-dimethyl-p-toluidin und 0,03% 4-Methyl-2,6-di-tert-butylphenol hergestellt. Diesem Reaktionsharz auf Methacrylatbasis werden mittels eines Dissolvers zusätzlich 10% CaO (bezogen auf 100% Reaktionsharz) zugegeben. Zum Aushärten wird anschließend 1 % Benzoylperoxid zugefügt.

### Probe E2

### Beispiel 3

Es wird ein Gemisch aus 66,27% Methylmethacrylat, 25% eines Polymeren, bestehend aus Methylmethacrylat-co-Methacrylsäure und 2-Ethylhexylacrylat, 3% Triethylenglycoldimethacrylat, 0,3% N,N-bis(2-hydroxypropyl)-p-toluidin, 0,4% N,N-dimethyl-p-toluidin, 0,03% 4-Methyl-2,6-di-tert-butylphenol sowie 5% gamma-Methacryloyloxypropyltrimethoxysilan hergestellt. Diesem Reaktionsharz auf Methacrylatbasis werden mittels eines Dissolvers zusätzlich 10% CaO und 40% Zement (bezogen auf 100% Reaktionsharz) zugegeben. Zum Aushärten wird anschließend 1 % Benzoylperoxid zugefügt.

### Probe E3

### Beispiel 4

Es wird ein Gemisch aus 66,27% Methylmethacrylat, 25% eines Polymeren, bestehend aus Methylmethacrylat-co-Methacrylsäure und 2-Ethylhexylacrylat, 3% Triethylenglycoldimethacrylat, 0,3% N,N-bis(2-hydroxypropyl)-p-toluidin, 0,4% N,N-dimethyl-p-toluidin, 0,03% 4-Methyl-2,6-di-tert-butylphenol sowie 5% gamma-Methacryloyloxypropyltrimethoxysilan hergestellt. Diesem Reaktionsharz auf Methacrylatbasis werden mittels eines Dissolvers zusätzlich 5% CaO und 80% Zement (bezogen auf 100% Reaktionsharz) zugegeben. Zum Aushärten wird anschließend 1 % Benzoylperoxid zugefügt.

### Probe E12

### Beispiel 5

Es wird ein Gemisch aus 66,27% Methylmethacrylat, 25% eines Polymeren, bestehend aus Methylmethacrylat-co-Methacrylsäure und 2-Ethylhexylacrylat, 3% Triethylenglycoldimethacrylat, 0,3% N,N-bis(2-hydroxypropyl)-p-toluidin, 0,4% N,N-dimethyl-p-toluidin, 0,03% 4-Methyl-2,6-di-tert-butylphenol sowie 5% gamma-Methacryloyloxypropyltrimethoxysilan hergestellt. Diesem Reaktionsharz auf Methacrylatbasis werden mittels eines Dissolvers zusätzlich 5% CaO und 100% Zement (bezogen auf 100% Reaktionsharz) zugegeben. Zum Aushärten wird anschließend 1 % Benzoylperoxid zugefügt.

### Probe E13

### Vergleichsbeispiel 1

Das Reaktionsharz 3P^{®} (JT-Elektronik GmbH, Lindau) wird verwendet.

### Probe V1

### Vergleichsbeispiel 2

Das Reaktionsharz Easy Pur (CarboTech Fosroc, Essen) wird verwendet.

### Probe V2

### Vergleichsbeispiel 3

Das Reaktionsharz Alocan^{®} (Alocit Chemie GmbH, Konstanz) wird verwendet.

### Probe V3

### Beispiel 9

### Schrumpfverhalten

Das Schrumpfverhalten wurde entsprechend der Richtlinie für Schutz und Instandsetzung von Betonbauteilen, Teil 4, Ausgabe 1992, in 1 m langen Schrumpfrinnen (Schenkellänge der Rinne ca. 3 cm) durchgeführt. Die Versuche werden bei Raumtemperatur durchgeführt. Die Rinne wird jeweils mit 50 g Reaktionsharz gefüllt und bei Raumtemperatur gelagert. Nach 24 Stunden wird der Schrumpf gemessen. Anschließend wird der Probekörper auf 70°C erwärmt und 48 Stunden bei dieser Temperatur gelagert. Diese Temperung simuliert den Alterungsprozess. Der Probekörper wird wiederum vermessen. Die Ergebnisse sind in der folgenden Tabelle zusammengefasst:

**Tabelle 1: Schrumpf nach Aushärtung bei Raumtemperatur und nach Lagerung bei 70°C**

| **Material** | **Schrumpf nach 24 h bei RT** | **Schrumpf nach 48 h bei 70 °C** |
|---|---|---|
| | **[mm]** | **[mm]** |
| Probe E1 | 0 | 0 |
| Probe E2 | -0,1 | 0 |
| Probe E3 | 0 | 0 |
| Probe E12 | -2,1 | -1,8 |
| Probe E13 | -3,0 | -2,0 |
| Probe V1 | 0 | -8,1 |
| Probe V2 | -0,3 | -3,4* |
| Probe V3 | -4,1 | -6,3 |

| | | |
|---|---|---|
| Schrumpf (-), * Schrumpf nach 48 h bei Raumtemperatur (RT) | | |

Die erfindungsgemäßen Reaktionsharze auf Methacrylatbasis (E1, E2, E3) zeigen nach 24 Stunden Lagerung bei Raumtemperatur nur geringen bzw. keinen Schrumpf und nach der Temperung keinen Schrumpf. Die erfindungsgemäßen Reaktionsharze auf Methacrylatbasis mit 80% bzw. 100% Feinfüller (E12, E13) zeigen nach 24 Stunden Lagerung bei Raumtemperatur einen etwas stärkeren Schrumpf, der jedoch nach der Temperung abnimmt. Die Vergleichsversuche zeigen, dass herkömmliche Materialien zunehmend schrumpfen.

### Beispiel 10

Es wird ein Gemisch aus 71,27% Methylmethacrylat, 25% eines Polymeren, bestehend aus Methylmethacrylat-co-Methacrylsäure und 2-Ethylhexylacrylat, 3% Triethylenglycoldimethacrylat, 0,3% N,N-bis(2-hydroxypropyl)-p-toluidin, 0,4% N,N-dimethyl-p-toluidin und 0,03% 4-Methyl-2,6-di-tert-butylphenol hergestellt. Diesem Reaktionsharz auf Methacrylatbasis werden mittels eines Dissolvers zusätzlich 10% CaO (bezogen auf 100% Reaktionsharz) zugegeben. Zum Aushärten wird anschließend 1 % Benzoylperoxid zugefügt.

### Probe E4

### Beispiel 11

Es wird ein Gemisch aus 71,27% Methylmethacrylat, 25% eines Polymeren, bestehend aus Methylmethacrylat-co-Methacrylsäure und 2-Ethylhexylacrylat, 3% Triethylenglycoldimethacrylat, 0,3% N,N-bis(2-hydroxypropyl)-p-toluidin, 0,4% N,N-dimethyl-p-toluidin und 0,03% 4-Methyl-2,6-di-tert-butylphenol hergestellt. Diesem Reaktionsharz auf Methacrylatbasis werden mittels eines Dissolvers zusätzlich 5% CaO (bezogen auf 100% Reaktionsharz) zugegeben. Zum Aushärten wird anschließend 1 % Benzoylperoxid zugefügt.

### Probe E5

### Beispiel 12

Es wird ein Gemisch aus 71,27% Methylmethacrylat, 25% eines Polymeren, bestehend aus Methylmethacrylat-co-Methacrylsäure und 2-Ethylhexylacrylat, 3% Triethylenglycoldimethacrylat, 0,3% N,N-bis(2-hydroxypropyl)-p-toluidin, 0,4% N,N-dimethyl-p-toluidin und 0,03% 4-Methyl-2,6-di-tert-butylphenol hergestellt. Diesem Reaktionsharz auf Methacrylatbasis werden mittels eines Dissolvers zusätzlich 3% CaO (bezogen auf 100% Reaktionsharz) zugegeben. Zum Aushärten wird anschließend 1 % Benzoylperoxid zugefügt.

### Probe E6

### Beispiel 13

### Schrumpfverhalten bei Raumtemperatur

Das Schrumpfverhalten wurde entsprechend der Richtlinie für Schutz und Instandsetzung von Betonbauteilen, Teil 4, Ausgabe 1992, in 1m langen Schrumpfrinnen (Schenkellänge der Rinne ca. 3 cm) durchgeführt. Die Versuche werden bei Raumtemperatur durchgeführt. Die Rinne wird jeweils mit 50 g Reaktionsharz gefüllt und bei Raumtemperatur gelagert. Nach 24 Stunden wird der Schrumpf bzw. die Expansion gemessen. Anschließend wird der Probekörper weitere 5 Tage, 7 Tage, 10Tage bzw. 14 Tage unter normalen Umgebungsbedingungen (bei Raumtemperatur und Luftfeuchtigkeit) gelagert. Der Probekörper wird jeweils vermessen.

### (Probe E4-E6)

**Tabelle 2: Schrumpf (-) bzw. Expansion (+) bei Lagerung bei Raumtemperatur**

| **Material** | **24 h** | **5 Tage** | **7 Tage** | **10 Tage** | **14 Tage** |
|---|---|---|---|---|---|
| | **[mm]** | **[mm]** | **[mm]** | **[mm]** | **[mm]** |
| Probe E4 | -3,5 | -1,5 | -0,5 | +2 | +3,5 |
| Probe E5 | -3,5 | -3 | -2 | -0,5 | +0,5 |
| Probe E6 | -0,6 | -1 | ±0 | +1 | +1 |

In Abhängigkeit vom CaO-Gehalt ist der Schrumpf nach 24 Stunden verschieden stark. Die Probekörper expandieren über die Zeit. Spätestens nach 14 Tagen sind alle Probekörper länger, als anfangs hergestellt.

### Beispiel 14

Es wird ein Gemisch aus 71,27% Methylmethacrylat, 25% eines Polymeren, bestehend aus Methylmethacrylat-co-Methacrylsäure und 2-Ethylhexylacrylat, 3% Triethylenglycoldimethacrylat, 0,3% N,N-bis(2-hydroxypropyl)-p-toluidin, 0,4% N,N-dimethyl-p-toluidin und 0,03% 4-Methyl-2,6-di-tert-butylphenol hergestellt. Diesem Reaktionsharz auf Methacrylatbasis werden mittels eines Dissolvers zusätzlich 10% CaO (bezogen auf 100% Reaktionsharz) zugegeben. Zum Aushärten wird anschließend 1 % Benzoylperoxid zugefügt.

### Probe E7

### Beispiel 15

Es wird ein Gemisch aus 71,27% Methylmethacrylat, 25% eines Polymeren, bestehend aus Methylmethacrylat-co-Methacrylsäure und 2-Ethylhexylacrylat, 3% Triethylenglycoldimethacrylat, 0,3% N,N-bis(2-hydroxypropyl)-p-toluidin, 0,4% N,N-dimethyl-p-toluidin und 0,03% 4-Methyl-2,6-di-tert-butylphenol hergestellt. Diesem Reaktionsharz auf Methacrylatbasis werden mittels eines Dissolvers zusätzlich 5% CaO (bezogen auf 100% Reaktionsharz) zugegeben. Zum Aushärten wird anschließend 1 % Benzoylperoxid zugefügt.

### Probe E8

### Beispiel 16

Es wird ein Gemisch aus 71,27% Methylmethacrylat, 25% eines Polymeren, bestehend aus Methylmethacrylat-co-Methacrylsäure und 2-Ethylhexylacrylat, 3% Triethylenglycoldimethacrylat, 0,3% N,N-bis(2-hydroxypropyl)-p-toluidin, 0,4% N,N-dimethyl-p-toluidin und 0,03% 4-Methyl-2,6-di-tert-butylphenol hergestellt. Diesem Reaktionsharz auf Methacrylatbasis werden mittels eines Dissolvers zusätzlich 3% CaO (bezogen auf 100% Reaktionsharz) zugegeben. Zum Aushärten wird anschließend 1 % Benzoylperoxid zugefügt.

### Probe E9

### Beispiel 17

### Schrumpfverhalten in Wasser

Ein Anwendungsgebiet für diese Materialien sind Kanalrohre. Die Bedingungen werden über die Lagerung der Materialien in VE-Wasser (vollentsalztes Wasser) hochgestellt. Die Untersuchungen mit VE-Wasser sind auf Abwässer übertragbar. Das Schrumpfverhalten wurde entsprechend der Richtlinie für Schutz und Instandsetzung von Betonbauteilen, Teil 4, Ausgabe 1992, in 1 m langen Schrumpfrinnen (Schenkellänge der Rinne ca. 3 cm) durchgeführt. Die Versuche werden bei Raumtemperatur durchgeführt. Die Rinne wird jeweils mit 50 g Reaktionsharz gefüllt und bei Raumtemperatur gelagert. Nach 24 Stunden wird der Schrumpf bzw. die Expansion gemessen.

Anschließend werden die Probekörper 5 Tage, 7 Tage, 10 Tage bzw. 14 Tage in VE-Wasser gelagert. Die Probekörper werden jeweils vermessen.

### (Probekörper E7-E9)

**Tabelle 3: Schrumpf (-) bzw. Expansion (+) bei Lagerung bei Raumtemperatur und in VE-Wasser**

| **Material** | **24 h RT** | **5 Tage W** | **7 Tage W** | **10 Tage W** | **14 Tage W** |
|---|---|---|---|---|---|
| | **[mm]** | **[mm]** | **[mm]** | **[mm]** | **[mm]** |
| Probe E7 | -3 | +3,5 | +4 | +5 | +5,5 |
| Probe E8 | -3,5 | +2 | +2 | +2 | +2 |
| Probe E9 | -0,7 | +1,5 | +2,5 | +2 | +3 |

| | | | | | |
|---|---|---|---|---|---|
| RT: Raumtemperatur W: VE-Wasser | | | | | |

Der anfängliche Schrumpf bei 24-stündiger Lagerung bei Raumtemperatur wird durch die Lagerung in Wasser kompensiert. Nach 5 Tagen sind bereits alle Proben expandiert, so dass sie länger als direkt nach ihrer Herstellung sind.

### Beispiel 18

Es wird ein Gemisch aus 71,27% Methylmethacrylat, 25% eines Polymeren, bestehend aus Methylmethacrylat-co-Methacrylsäure und 2-Ethylhexylacrylat, 3% Triethylenglycoldimethacrylat, 0,3% N,N-bis(2-hydroxypropyl)-p-toluidin, 0,4% N,N-dimethyl-p-toluidin und 0,03% 4-Methyl-2,6-di-tert-butylphenol hergestellt. Diesem Reaktionsharz auf Methacrylatbasis werden mittels eines Dissolvers zusätzlich 20% CaO (bezogen auf 100% Reaktionsharz) zugegeben. Zum Aushärten wird anschließend 1 % Benzoylperoxid zugefügt.

### Probe E10

### Beispiel 19

### Schrumpfverhalten in Wasser (Langzeit)

Zur Simulation des dauerhaften Kontaktes mit Wasser wurden Langzeitversuche durchgeführt. Das Schrumpfverhalten wurde entsprechend der Richtlinie für Schutz und Instandsetzung von Betonbauteilen, Teil 4, Ausgabe 1992, in 1m langen Schrumpfrinnen (Schenkellänge der Rinne ca. 3 cm) durchgeführt. Die Versuche werden bei Raumtemperatur durchgeführt. Die Rinne wird jeweils mit 50 g Reaktionsharz gefüllt und bei Raumtemperatur gelagert. Nach 24 Stunden wird der Schrumpf bzw. die Expansion gemessen. Anschließend wird der Probekörper 7 Tage, 14 Tage (nicht bei E12 und E13 gemessen), 21 Tage bzw. 35 Tage in VE-Wasser gelagert. Der Probekörper wird jeweils vermessen.

Die Versuche werden mit folgenden Harzen durchgeführt:
Probe E10 entspricht der Zusammensetzung von Beispiel 18
Probe E12 entspricht der Zusammensetzung von Beispiel 4
Probe E13 entspricht der Zusammensetzung von Beispiel 5

Die Ergebnisse sind in der folgenden Tabelle zusammengefasst:

**Tabelle 4: Schrumpf (-) bzw. Expansion (+) bei Lagerung bei Raumtemperatur und in VE-Wasser**

| **Material** | **24 h RT** | **7 Tage W** | **14 Tage W** | **21 Tage W** | **35 Tage W** |
|---|---|---|---|---|---|
| | **[mm]** | **[mm]** | **[mm]** | **[mm]** | **[mm]** |
| Probe E10 | -1,2 | +4,5 | +7 | +7,5 | +8 |
| Probe E12 | -2,3 | +0,3 | / | +0,3 | +2,6 |
| Probe E13 | -3,0 | -1,4 | / | +1,1 | +1,7 |

| | | | | | |
|---|---|---|---|---|---|
| RT: Raumtemperatur W: VE-Wasser | | | | | |

Der anfängliche Schrumpf bei 24-stündiger Lagerung bei Raumtemperatur wird durch die Lagerung in Wasser kompensiert. Nach 5-10 Tagen sind die Probekörper länger als direkt nach ihrer Herstellung. Die Expansion verlangsamt sich mit der Zeit.

### Beispiel 20

### Nasshaftung

Eine Betonplatte der Qualität B55 wird 10 Tage bei Raumtemperatur in Wasser gelagert. Nach der Entnahme wird das Wasser nur abgetupft und eine Silikonbegrenzung zur Reaktionsharzauftragung um die Betonplatte verwendet. Anschließend werden 500-600 g Harz pro m² mit einem Spatel auf der Platte gleichmäßig verteilt. Zum Aushärten wird die Platte ca. 1 Stunde bei Raumtemperatur gelagert. Es wird eine Ringnut mit einem Durchmesser von d=50 mm ca. 8 mm tief in die Platte gebohrt. Der Haftzugsstempel wird aufgeklebt. Nach 1 Stunde wird die Zugprüfung mit einer Abzugsgeschwindigkeit von 100 N/s (F10D ISIM2000, Fa. Freundl, Wennigsen) durchgeführt.

Zusätzlich wird die Nasshaftung in glasierten Steinzeugrohren, wie sie üblicherweise in Kanalrohren eingesetzt werden, getestet. Dazu wird das Kanalrohr mit einem nassen Tuch befeuchtet. Anschließend werden 500-600 g Harz pro m² mit einem Spatel auf dem Kanalrohr gleichmäßig verteilt. Zum Aushärten wird das Kanalrohr mit dem Reaktionsharz ca. 1 Stunde bei Raumtemperatur gelagert. Es wird eine Ringnut mit einem Durchmesser von d=50 mm ca. 8 mm tief in das Werkstück gebohrt. Der Haftzugsstempel wird aufgeklebt. Nach 1 Stunde wird die Zugprüfung mit einer Abzugsgeschwindigkeit von 100 N/s (F10D ISIM2000, Fa. Freundl, Wennigsen) durchgeführt.

Die Versuche werden mit folgenden Harzen durchgeführt:
Probe E1 entspricht der Zusammensetzung von Beispiel 1
Probe E3 entspricht der Zusammensetzung von Beispiel 3
Probe V1 entspricht der Zusammensetzung von Vergleichsbeispiel 1
Probe V2 entspricht der Zusammensetzung von Vergleichsbeispiel 2
Probe E11 entspricht der Zusammensetzung von Beispiel 3, jedoch ohne Zusatz von 40% Zement
Probe E13 entspricht der Zusammensetzung von Beispiel 5

Die Ergebnisse werden in der nachfolgenden Tabelle dargestellt.

**Tabelle 5: 0: keine Haftung**

| **Probe** | **Haftung Betonplatte B55** | **Haftung Kanalrohr** |
|---|---|---|
| | **[N/mm²]** | **[N/mm²]** |
| E1 | 3,2 BB | 0 |
| E3 | 3,4 BB | 3,2 BB |
| E11 | 3,2 BB | 2,8 KB |
| E13 | / | 2,6 KB |
| V1 | 0 | 0 |
| V2 | 0 | 0 |

| | | |
|---|---|---|
| BB: Betonbruch KB: Klebestellen-Bruch | | |

Die erfindungsgemäßen Reaktionsharze zeigen auf der Betonplatte der Qualität B55 sehr gute Nasshaftung, während die handelsüblichen Reaktionsharze (V1 und V2) keine Nasshaftung aufweisen. Die erfindungsgemäßen Reaktionsharze mit 10% CaO (E11), mit 10% CaO und 40% Zement (E3) bzw. mit 100% Zement (E13) zeigen sehr gute Nasshaftung auf glasiertem Steinzeug (Kanalrohr), während die handelsüblichen Reaktionsharze (V1 und V2) keine Nasshaftung aufweisen. Die Angabe BB bedeutet, dass nicht die Klebestelle Beton-Reaktionsharz, sondern das Rohrmaterial Beton gebrochen ist. Für die Klebestelle Beton-Reaktionsharz sind somit weitaus höhere Werte möglich. Dies trifft für die Mehrzahl der Versuche zu. Lediglich Versuchsergebnis E11 (Haftung auf Kanalrohr) zeigt, dass die Klebestelle zwischen Prüfstempel und Reaktionsharz (KB) die Bruchstelle darstellt. Für die Klebestelle Beton-Reaktionsharz sind somit weitaus höhere Werte möglich. Bei dem Haftversuch (E1) im Kanalrohr war die Haftung zwischen Reaktionsharz und Beton unzureichend.

## Patentansprüche

1. Reaktionsharz auf Methacrylatbasis, **dadurch gekennzeichnet, dass** Calciumoxid, Magnesiumoxid, Ettringit und/oder Calciumsulfat und gegebenenfalls Feinfüller zugesetzt wird.

2. Reaktionsharz auf Methacrylatbasis gemäß Anspruch 1, **dadurch gekennzeichnet, dass** 1-20% Calciumoxid zugesetzt werden.

3. Reaktionsharz auf Methacrylatbasis gemäß Anspruch 1, **dadurch gekennzeichnet, dass** 1-10% Calciumoxid zugesetzt werden.

4. Reaktionsharz auf Methacrylatbasis gemäß Anspruch 1, **dadurch gekennzeichnet, dass** 1-200% Feinfüller zugesetzt werden.

5. Reaktionsharz auf Methacrylatbasis gemäß Anspruch 1, **dadurch gekennzeichnet, dass** 20-150% Feinfüller zugesetzt werden.

6. Verbund aus Glasfasergewebe und Reaktionsharz auf Methacrylatbasis gemäß Anspruch 1.

7. Verwendung von Reaktionsharzen auf Methacrylatbasis gemäß Anspruch 1 als Reparaturmaterial für Kanalsanierungen.

8. Verwendung von Verbunden aus Glasfasergewebe und Reaktionsharzen auf Methacrylatbasis gemäß Anspruch 6 als Reparaturmaterial für Kanalsanierungen.

9. Verwendung von Reaktionsharzen auf Methacrylatbasis gemäß Anspruch 1 als Dübelharz.

## Claims

1. Methacrylate-based reactive resin, **characterized in that** calcium oxide, magnesium oxide, ettringite and/or calcium sulphate and optionally fine filler is added.

2. Methacrylate-based reactive resin according to Claim 1, **characterized in that** 1-20% calcium oxide is added.

3. Methacrylate-based reactive resin according to Claim 1, **characterized in that** 1-10% calcium oxide is added.

4. Methacrylate-based reactive resin according to Claim 1, **characterized in that** 1-200% fine filler is added.

5. Methacrylate-based reactive resin according to Claim 1, **characterized in that** 20-150% fine filler is added.

6. Composite formed from glass fibre fabric and methacrylate-based reactive resin according to Claim 1.

7. Use of methacrylate-based reactive resins according to Claim 1 as a repair material for sewer remediations.

8. Use of composites formed from glass fibre fabric and methacrylate-based reactive resins according to Claim 6 as a repair material for sewer remediations.

9. Use of methacrylate-based reactive resins according to Claim 1 as a plugging resin.

## Revendications

1. Résine réactive à base de méthacrylate, **caractérisée en ce qu'**on ajoute de l'oxyde de calcium, de l'oxyde de magnésium, de l'ettringite et/ou du sulfate de calcium et le cas échéant des charges fines.

2. Résine réactive à base de méthacrylate selon la revendication 1, **caractérisée en ce qu'**on ajoute 1-20% d'oxyde de calcium.

3. Résine réactive à base de méthacrylate selon la revendication 1, **caractérisée en ce qu'**on ajoute 1-10% d'oxyde de calcium.

4. Résine réactive à base de méthacrylate selon la revendication 1, **caractérisée en ce qu'**on ajoute 1-200% de charges fines.

5. Résine réactive à base de méthacrylate selon la revendication 1, **caractérisée en ce qu'**on ajoute 20-150% de charges fines.

6. Composite en tissu de fibres de verre et en résine réactive à base de méthacrylate selon la revendication 1.

7. Utilisation de résines réactives à base de méthacrylate selon la revendication 1 comme matériau de réparation pour la rénovation des égouts.

8. Utilisation de composites en tissu de fibres de verre et en résines réactives à base de méthacrylate selon la revendication 6 comme matériau de réparation pour la rénovation des égouts.

9. Utilisation de résines réactives à base de méthacrylate selon la revendication 1 comme adhésif à deux composants.
